# EUROPEAN PATENT APPLICATION

(11) **EP 1 134 012 A1**
(43) Date of publication of application: **19.09.2001**
(21) Application number: 01100162.5
(22) Date of filing: 16.01.2001
(51) Int. Cl.: B01D 39/00, C02F 1/00, C02F 1/50

(54) **Filter for Water treatment**

(30) Priority: 21.01.2000 US 177558 P; 17.04.2000 US 550668; 06.11.2000 US 707114
(71) Applicant: King Technology, Inc., Hopkins, Minnesota 55343 (US)
(72) Inventor: King, Joseph A., Wayzata, NN 55391 (US); Edelson, Martin Robert, Edina, NN 55439 (US)
(74) Representative: Modiano, Guido, Dr.-Ing.

(57) **Abstract**

A water treatment composition comprised of a metal ion yielding material secured to an adhesive, with the adhesive secured to a structure, so that when the structure is placed in a body of water the concentration of metal ions is maintained at level sufficient to kill bacteria and sufficient to permit release of metal ions over an extended period of time. Also, a method of securing a metal ion yielding material, as well as a method of manufacture of an article, by first adhering the metal ion yielding material to a structure and then forming the structure into an article for placement in a body of water to maintain the desired metal ion concentration therein.

## Description

### FIELD OF THE INVENTION

This invention relates generally to a dual filter system and apparatus and more specifically to a replaceable water filter carrying a water purification composition dispersible secured therein to enable the water filter to simultaneously and in situ purify water as water flows through the water filter while minimizing disruption to the normal flow of water through the filter system.

### BACKGROUND OF THE INVENTION

In water treatment systems it is known that bacteria killing materials such as metal ions are effective in killing bacteria. One commonly used metal ion is the silver ion and another commonly used bacteria killing and material is the zinc ion. Other types of ions are used as algaecides. The difficulty in use of metal ions is to maintain the ion concentration within proper ranges since too low metal ion concentration results in ineffective killing of bacteria and to high metal ion concentrations can be harmful. Another difficulty is to be able to controllable release the materials to provide for water purification over an extended period of time.

It has been demonstrated that a single bacteria killing material that releases silver ions can be effectively used to kill bacteria in water systems such as spas, hot tubs and swimming pools over an extended period of time. In some cases multiple bacteria killing materials that releases both ions of silver and zinc are used to kill bacteria over an extended period of time.

In one embodiment of a bacteria killing material I use an adhesive that is securable to both a metal ion generating material and to a particle carrier that is placed in a container within the water supply. Water is allowed to flow through the container as the bacteria killing material controllable release metal ions to kill bacteria in the water. While the use of bacteria killing materials that release metal ions is known, the present invention is directed to the structure and mechanism for holding the bacteria killing materials so as not to interfere with the release of the bacteria killing materials such as metal ions without disrupting the normal flow of water through the system.

In most recirculation systems such as for swimming pools, spas and hot tubs a filter is included that removes unwanted waste particles from the water. In one embodiment, which is shown in U.S. patent 4,780,197 a container is placed in the core of the filter. The container is filled with a bacteria killing material such as chlorine or bromine. In this type of arrangement one can provide for removal of waste particles as well as killing of bacteria in the same part of the system. While this type of system brings the bacteria killing and water purification into the filter housing it does not provide for in situ killing of bacteria and removal of debris. However, more importantly, devices placed in the core of the filter create obstructions to normal flow though the fluid filter. The first obstruction to normal flow is the container itself which hold the bactericide and the second obstruction to normal flow is the materials that are placed in the container. In the present invention the obstruction to normal flow of water through the filter system is substantially eliminated as the bacteria killing material is either secured directly to the filter medium or to a portion of the filter where the flow area is generally the largest thereby allowing one to maintain the normal flow patterns of the filter mechanism.

In the present invention, a water treatment composition, for example, a water purification material, such as a bacteria killing material is secured to a replaceable filter that normally removes debris from the water. With the present invention the replaceable filter performs a dual in situ function in that the filter simultaneously removes debris and kills bacteria. Consequently, when the filter is replaced due to accumulation of debris thereon the bacteria killing material is replaced in the same operation thus minimizing the consumer maintenance in maintaining a water system in proper condition. Thus the present invention becomes consumer friendly as the need for maintenance of the system can be reduced.

In one embodiment of the dual filter apparatus of the present invention, a bacteria killing material is affixed directly to fibers that are formed into a filter medium with the fibers formed into a network for screening removal of debris from the water. As water is directed through the filter medium formed from the fibers containing the bacteria killing material the filter medium traps debris thereon, while the bacteria killing material kills bacteria thereon. In this embodiment the dual filter apparatus simultaneously accomplishes the in situ task of both filtering debris from the water and killing bacteria as the water passes through the filter. Other embodiments and refinement of the invention are described herein. The preferred embodiment is described in relation to a water purification material comprising a bacteria killing material and other water purification materials such as algaccides, clarifiers or pH adjusters can be used with the present invention.

### SUMMARY OF THE INVENTION

Briefly, the present invention comprises an in situ water purification system comprising a replaceable dual filter having a porous medium for removing debris and a bacteria killing material thereon for killing bacteria while minimizing obstruction to normal flow through the system as well as a process of making a water purification device by dispersible securing a bacteria killing material to a filter medium for removing debris and a water treatment composition suitable for use thereon comprised of a metal ion yielding material secured to an adhesive with the adhesive secured to a structure so that when the structure is placed in a body of water the concentration of aqueous metal ions is maintained at levels sufficient to kill bacteria and the secured metal ion yielding material is sufficient to permit release of metal ions over an extended period of time. The invention further comprises methods of securing a metal ion yielding material, as well as a method of manufacture of an article, by first adhering the metal ion yielding material to a structure and then forming the structure into an article that can be placed in a body of water to maintain the proper metal ion concentration therein.

### BRIEF DESCRIPTION OF THE DRAWINGS

Figure 1 is a perspective view of a carrier such as zinc pellet having a matrix carrying a silver yielding ion thereon; and
Figure 2 is a sectional view taken along lines 2-2 of Figure 1 to show the adhesive matrix located around the zinc pellet;
Figure 3 is a perspective view of a cartridge filter of the present invention;
Figure 4 is a cross-sectional view of the filter of Figure 1 taken along lines 4-4 of Figure 3;
Figure 5 is a side view of a portion of a filter medium without a bacteria killing material thereon;
Figure 6 is a front view of the portion of the filter medium of Figure 5;
Figure 7 is front view of a portion of the filter medium of Figure 6 with a bacteria killing material secured thereto.
Figure 8 is a partial schematic view of a system for manufacturing filter medium.
Figure 9 is a top view a filter cartridge ;
Figure 10 is a sectional view taken along lines 10-10 of Figure 9 to show the invention of a filter with a bacteria killing material located therein;
Figure 11 is a perspective view of a filter sleeve that has been formed from a single piece of cloth with the filter stitched and sonic welded into an annular shape;
Figure 12 is an exploded pictorial view of a filter cartridge housing contain a bacteria killing material;
Figure 13 is partial schematic view of a dual filter system for simultaneously removing debris and killing bacteria.
Figure 14 shows a method of applying water purification materials to a web using a spray coating method;
Figure 15 shows a method of applying water purification materials to a web using a calendar roll coating method;
Figure 16 shows a method of applying water purification materials to a web using a knife-over-web method;
Figure 17 shows a method of applying water purification materials to strips of material using an immersion coating method;
Figure 18 shows a slurry coating method of applying water purification materials to a web using a die coater;
Figure 19 shows a slurry coating method of applying water purification materials to a web using a calendar roll coater;
Figure 20 shows a transfer coating method of applying water purification materials to a semi-finished product: and
Figure 21 shows a die coating method of applying water purification materials to a web.

### DESCRIPTION OF THE PREFERRED EMBODIMENT

In the invention described herein, one forms an in situ water purification system comprising a water treatment composition and a filter medium suitable for inserting into a water supply to both kill bacteria therein and to screen debris from the water. In one embodiment the water treatment composition comprises a carrier and a metal ion yielding material which is secured to a filter medium. Attached to the carrier is a bacteria killing material which, in the preferred embodiment, comprises silver chloride (AgCl) coating located thereon. The silver chloride particles are suspended in an adhesive matrix that adhesively secures the silver chloride particles proximate thereto in an ion yielding relationship. Another suitable metal ion yielding material suitable for use is zinc.

The bacteria killing material is preferably a metal ion yielding material although other materials could be used if the materials can be maintained in active mode over an extended period of time. An example of silver ion yielding material is silver chloride which is described more fully in my co-pending application Serial Number 08/957,265, filed October 24, 1997. titled Water Treatment Composition. Silver chloride is a white powder that can be melted or cast like a metal, and is derived from heating a silver nitrate solution and adding hydrochloric acid or salt solution to produce a silver chloride solution which is then boiled or filtered either in the dark or under a ruby red light to produce the silver chloride powder. In one embodiment of described process, the silver chloride while still in solution is combined with an adhesive to form an adhesive silver chloride solution. The adhesive and the silver chloride solution are then applied to a carrier such as a pellet. The adhesive is then cured to produce a pellet having a silver chloride coating adhesively adhered thereto with both the zinc and the silver chloride available for reacting with the chemicals within a bacteria cell to kill or damage the bacteria.

In a preferred embodiment of process, the silver chloride while still in solution is combined with an adhesive to form an adhesive silver chloride solution which is applied directly to a filter material for use in screening waste particles from a water source. The term adhesively secured herein is meant to include a surface attachment structure that does not prevent the bacteria killing materials from releasing the ions to kill unwanted bacteria.

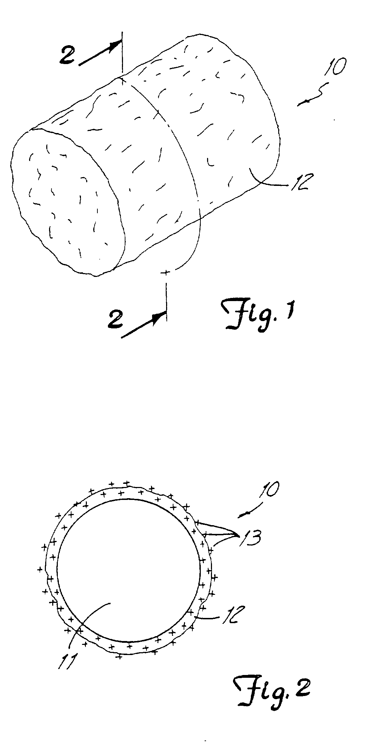

Referring to Figures 1 and 2, there is shown one way of forming a water treatment pellet 10 having an adhesive matrix coating 12. Adhesive matrix coating 12 comprises an adhesive that secures itself to the surface of both the silver ion generating material, which comprises silver chloride 13 and to the carrier, which is shown as a pellet 11. The process is described in relation to forming a silver chloride coating on a pellet so that the silver ion remains in a reactive state to react with the chemicals in the bacteria and effectively damage or kill the bacteria. However, the carrier 11 could be an active carrier, such as zinc as multiple ion generating material may be suitable for killing different types of bacteria.

Figure 2 is a cross-sectional view of the silver chloride coated pellet 10 of Figure 1 showing carrier particle 11 centrally located within adhesive matrix 12 that contains silver chloride 13 dispersed throughout the adhesive matrix 12. As can be seen from the drawing. the silver chloride 13 is maintained in the water porous matrix proximate the carrier pellet 11 to enable water to contact both the silver chloride located within the matrix. These type of pellets 11 can be placed directly into a container in the water to allow the bacteria killing materials to be released into the water. In one embodiment of the present invention the pellets containing the bacteria killing materials are secured directly to a filter medium so that the bacteria killing materials controllable release metal ions over an extended period of time.

In the embodiment shown in Figure 2 one coats a carrier particle with a silver ion yielding material such as silver chloride by adhesively affixing or securing the silver chloride to the carrier through a non-soluble water porous adhesive matrix. A suitable material for adhesively securing the silver chloride proximate the carrier is commercially available gelatin which can be cross-linked with an aqueous solution of formaldehyde or glutaraldehyde to form a non-soluble, water penetrable matrix on the exterior surface of the carrier. Other suitable non-soluble water porous adhesive matrixes are polyvinyl acetate. polyurethane, epoxy resin, polyvinyl alcohol and polyvinyl acetate.

In the process of forming individual carriers for the ion generating materials, one forms a plurality of carriers or water treatment members typically an 1/8 inch or smaller which are suitable for inserting into an inline feeder. Instead of placing the individual carriers into a separate inline feeder the present invention includes the step of securing the carriers with the ion generating material directly to the filter material used to form a mechanical filter. In the preferred mode of the invention, the ion generating materials are secured directly to the fabric or filter medium without the use of a separate carrier. In both cases one obtains a dual filter system that provides for in situ killing of bacteria and removal of debris from the water flowing through the filter system.

The following examples illustrate how silver chloride particles were affixed proximate to the exterior surface of a carrier such as a pellet.

### Example 1

In order to coat a batch of pellets with an adhesive matrix containing silver chloride. 12.5 grams of silver nitrate are mixed in 25 ml of distilled water to form an aqueous silver nitrate mixture.

Next, 1.5 grams of gelatin are mixed in 25 ml of distilled water to form a gelatin mixture. The gelatin mixture is heated to a temperature of about 140 degrees F.

To eliminate lumps in the gelatin mixture, the gelatin mixture is then strained through a screen. At this point, 5 grams of sodium chloride are mixed into the gelatin mixture. The gelatin mixture is then combined with the aqueous silver nitrate mixture to convert the silver nitrate into silver chloride to thereby form an aqueous silver chloride gelatin mixture. A batch of pellets having a maximum dimension of about 1/8 inch are then heated to about 140 degrees F. The pellets are then sprayed with the heated, aqueous silver chloride gelatin mixture. In order to form a matrix to affix the silver chloride to the pellets, the silver chloride gelatin mixture is then immersed in an aqueous bath of glutaraldehyde for about 12 hours to react the gelatin with the glutaraldehyde. The curing produce an adhesive matrix that secured the pellets with the silver chloride that is dispersed throughout the adhesive matrix. After curing, the pellets, which are covered with a coating of silver chloride, are rinsed and air dried to produce pellets with a silver chloride coating affixed proximate to the pellets.

### Example 2

The above process was repeated except instead of immersing the pellets with the silver chloride gelatin mixture in an aqueous bath of formaldehyde, the pellets with the silver chloride gelatin mixture were cured in an aqueous bath of formaldehyde.

In the above examples, the pellets had a maximum dimension of about 1/8 of an inch. Larger or smaller pellets could be used; however, for use as a water treatment composition in a dispensing valve, it is preferred to have carrier in multiple pellets in order to present a larger surface area to the water containing the bacteria. While securing of the bacteria killing material to the pellet carrier has been described the bacteria killing material can also be secured directly to the filter medium using the same adhesive.

In the above described method of forming the bacteria killing material, the adhesive used was gelatin as gelatin is capable of adhering to the surfaces of both the carrier and the silver chloride. That is. gelatin which can be cross-linked in the presence of formaldehyde or glutaraldehyde to obtain the necessary adhesive characteristics remains non-soluble in the water and unreactive with either the carrier or the silver chloride, and thus can hold the silver chloride proximate the carrier. That is the cross-linked gelatin not only forms a surface attachment but forms a matrix to support or secure the silver chloride in proximity to the surface of the pellet. As the gelatin matrix is securable to the surfaces of both the silver chloride and to the pellets, one is assured that the silver ion yielding material will remain proximate each other to generate ions thereof. Also, the gelatin is desirable since the porosity of the adhesive matrix formed from gelatin allows bacteria containing water access to both the silver to enable both the silver ions to kill the bacteria in the water.

While gelatin is described as one of the adhesives, other suitable adhesives for securing the bacteria killing material to either the carrier or directly to the filter material so that the metal ions are controllable released include polyurethane, epoxy resin polyvinyl alcohol and polyvinyl acetate.

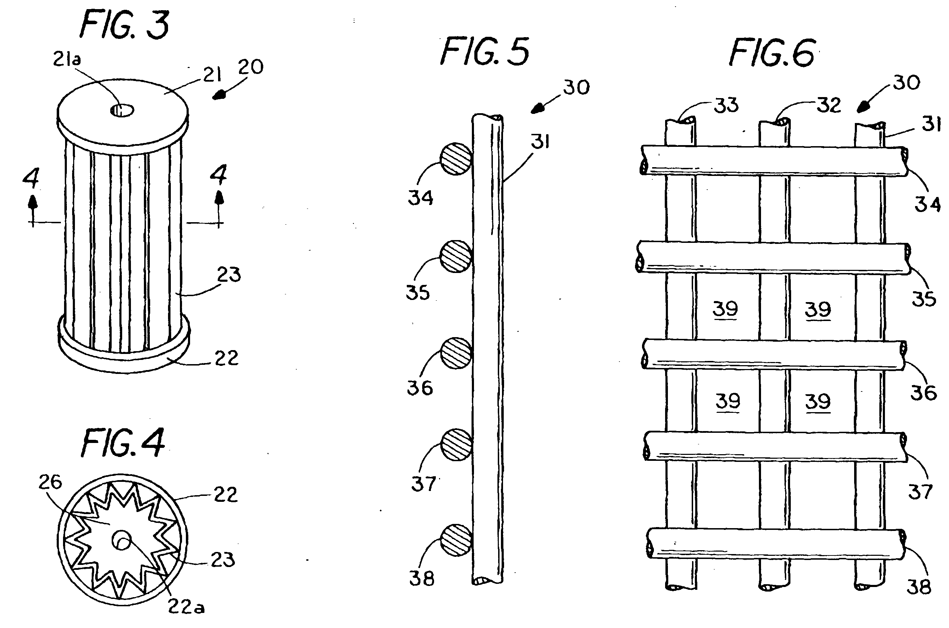

Referring to Figure 3, reference numeral 20 identifies a dual filter apparatus of the present invention for simultaneously removing debris and killing bacteria. The filter 20, which is in cartridge form, includes a first end cap 21 and a second end cap 22 with a porous pleated filter medium 23 secured therebetween for screening waste particles from the water as the water flows through the filter medium 23. End cap 21 is shown with an opening 21a for ingress of fluid, and similarly Figure 4 shows that end cap 22 includes an opening 22a for ingress of fluid into the interior 26 within the zig-zag shaped filter medium 23.

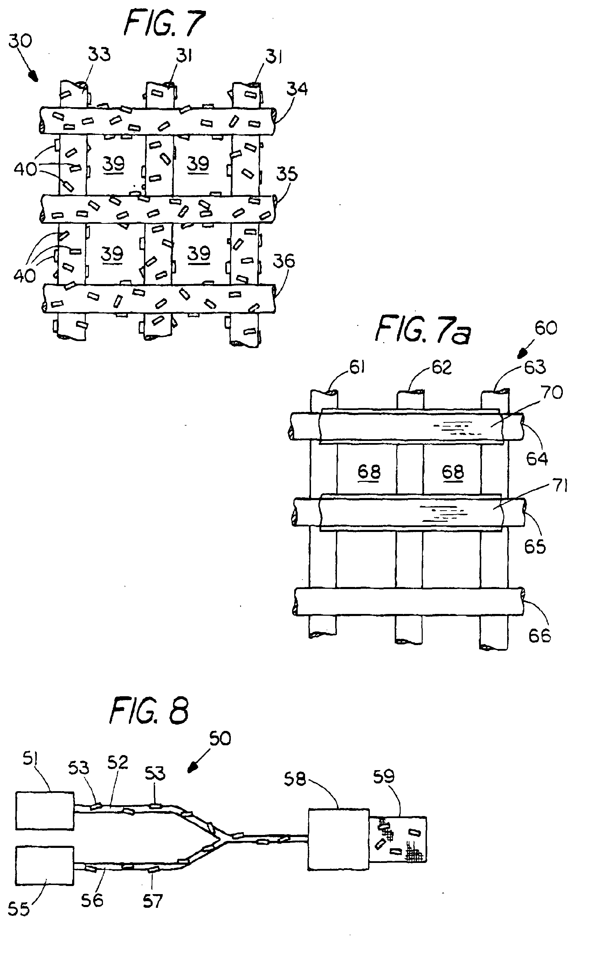

Figure 5 and Figure 6 show a portion of one embodiment of a porous filter medium 30 that is arranged in a cross-hatched pattern to form a network comprised of a set of vertical fibers 31, 32 and 33 supporting a set of horizontal fibers 34, 35, 36, 37 and 38 to provide a plurality of regular openings 39 therein for screening waste particles of larger size from the water. In normal operation of the filter medium 30, water flows though the openings 39 while the large debris particles encounter the external network of fibers and are thus prevented from flowing through the filter medium 30. In time the filter becomes clogged with waste particles and needs to be replaced. In the embodiment of Figure 5 and Figure 6 the fibers are shown as round with regular shaped openings therein; however, it should be understood that the shape of the fibers, the shape of the openings as well as the use of non-fibers are suitable for making a filter for removing water carried debris as the water flows through the filter medium.

Figure 7 shows the filter medium 30 with a bacteria killing material 40 dispersibly secured to the surface of the filter medium so as to minimize obstruction to normal flow through the filter housing. In the embodiment shown, the bacteria killing material comprises silver chloride and a pellet acting as a carrier. By securing the bacteria killing material to the fibers of the filter, one provides protrusions that come into contact with the water that flows through openings 39. Note, the obstruction to normal flow through the filter is minimized since the material does not require a separate container nor is the material concentrated in one region of the filter system. That is, placement of a housing in the core of a filter creates a restriction in a narrowest portion of the system. In the present invention the bacteria killing material is placed in the portion of the system where the volume restriction is the least. That is, the area of the filter medium is large compared to the flow area through the core of the filter. Consequently, sufficient bacteria killing material can be dispersible secured to the filter medium or proximate the filter medium so that the density of bacteria killing material per unit of flow area of the filter medium is small in comparison to the density of bacteria killing material which is required if the bacteria killing material is located in the core area of the filter. Thus, debris material which is larger than opening 39 is prevented from passing through the filer medium by the network of fibers while the water coming into contact with the bacteria killing material on the fibers receives the bacteria killing action. While only two layers of fibers are shown, it is apparent that multiple layers of fibers can be stacked to provide a torturous path for the water to follow thereby increasing the contact between the water and the bacteria killing material.

Figure 7a shows a portion of the filter medium 60 wherein the separate carrier for the bacteria killing material has been dispensed with. In this preferred mode the portion of the filter medium includes fibrous members 61, 62 and 63 that intersect with members 64, 65 and 66 to form a plurality of openings 68 therethrough. In the embodiment shown the bacteria killing material is dispersibly secured directly to fibers by a thin film of non-water soluble porous adhesive 70 and 71. The adhesive 70 dispersible secures the bacteria killing materials directly to the fibers of the filter medium in a condition to allow a controlled release of ions. In the embodiment shown, the bacteria killing material is preferably a controllable releasable ion yielding material selected from the group of metal ion yielding materials consisting of zinc sulphate, zinc carbonate, zinc chloride, copper carbonate. copper sulfate, silver chloride, stannous chloride and stannic chloride. Other ion yielding materials with controllable release include copper (II) acetate and its hydrates, copper (I) bromide and its hydrates, copper (II) bromide, copper (I) chloride and its hydrates, copper (II) chloride and its hydrates, copper (II) gluconate, copper (II) hydroxide, copper (II) oxide, copper sulfate, zinc acetate and its hydrates, zinc bromide and its hydrates, zinc carbonate hydroxide hydrate, zinc carbonate, zinc chloride and its hydrates, zinc citrate and its hydrates, zinc iodide and its hydrates, zinc nitrates and its hydrates, zinc oxide, zinc sulfate and its hydrates, silver acetate, silver carbonate, chelated silver ions, silver-exchanged zeolite, silver nitrate, silver oxide, silver sulfate. silver chloride. silver powder and colloidal silver, silver bromide and silver acetate.

In addition to water purification materials that kill bacteria, other water purification materials such as algaecides, clarifiers or even pH adjustment materials such as limestone can be carried by the present invention to provide the dual action of water screening for waste particles while simultaneously purifying the water.

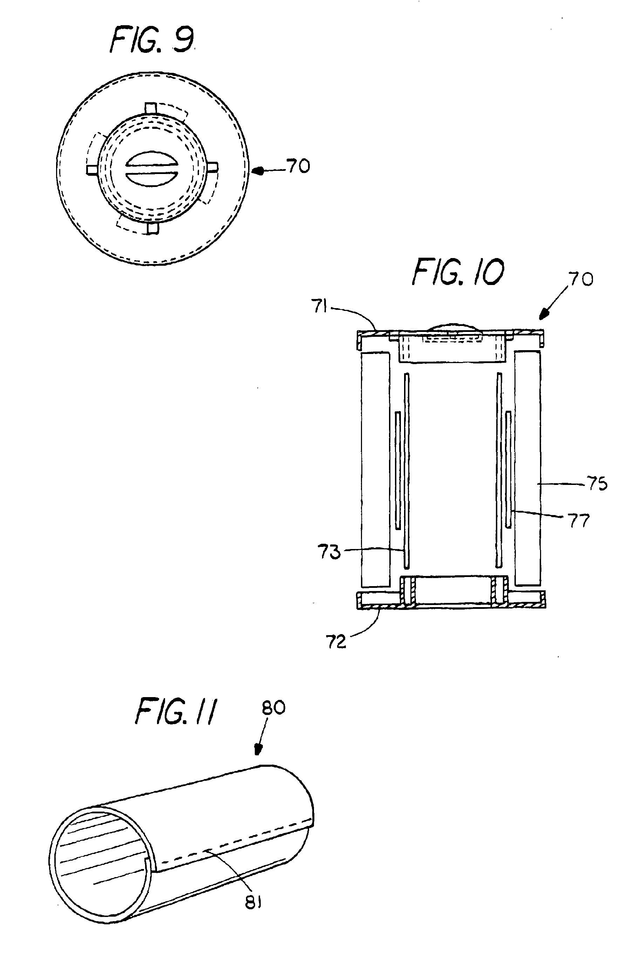

Figure 8 shows a method of making a filter medium that can simultaneously filter out debris and kill bacteria with two different bacteria killing materials. In the method illustrated in Figure 8, the filter medium manufacturing system 50 includes a first station 51 for forming a fiber 52 having a plurality of a first bacteria killing materials such as zinc particles 53 secured thereto. A second station 55 includes a second fiber 56 having a second bacteria killing material such as silver chloride particles 57 secured thereto. The fibers are directed into a third station 58 that weaves the fibers into a porous filter medium 59 comprised of fibers with a first bacteria killing material thereon and fibers with a second bacteria killing material thereon which are located in proximity to each other to thereby provide the bacteria killing action from two different bacteria killing materials. Although different embodiments are shown, in each embodiment the filter medium, which normally is used to remove debris from the water by screening the waste particles, is also used as a carrier for the first bacteria killing materials and the second bacteria killing materials which are dispersibly secured thereon so that water passing through the filter medium not only removes debris removed but also the bacteria is killed by the bacteria killing materials located on the filter medium.

Figure 9 is a top view a filter cartridge 70 and Figure 10 is a sectional exploded view of filter cartridge 70 taken along lines 10-10. Filter cartridge 70 includes a top cap member 71 and a bottom cap member 72 with a rigid core tube 73 that connects top cap member 71 to bottom cap member 72. A filter medium 75, which is arranged in an annular shape with a series of pleats that extend circumferentially around the exterior of filter cartage 70. Located between core tube 73 is an annular carrier that is impregnated with a bacteria killing material and more particularly to a bacteria killing material that controllable releases metal ions into water flowing through filer medium 75 to thereby effectively kill bacteria. Thus the embodiment shown in Figure 10 comprises a dual filter apparatus for a swimming pool. hot tub or spa with the filter medium 75 comprising a network of openings therein to enable water to flow therethrough while retaining waste particles. The bacteria killing material, is dispersibly secured in an annular carrier insert 77 proximate the filter medium 75. The bacteria killing material is releasable over time so that the flow path of water through and around annular carrier insert 77 kills bacteria therein while the filter medium 75 removes waste particles to thereby enable the dual filter apparatus to simultaneously remove waste particles and kill bacteria. By having the insert 77 attached to the filter cartridge 70 one can simultaneously replace the bacteria killing material and the filter cartridge. However, if desired the insert could be separately replaceable. Although insert 77 is shown attached to filter cartridge it is envisioned that insert 77 could also be placed directly in the line leading to or away from the filter housing or on the inside of the filter housing and proximate the outside of the filter.

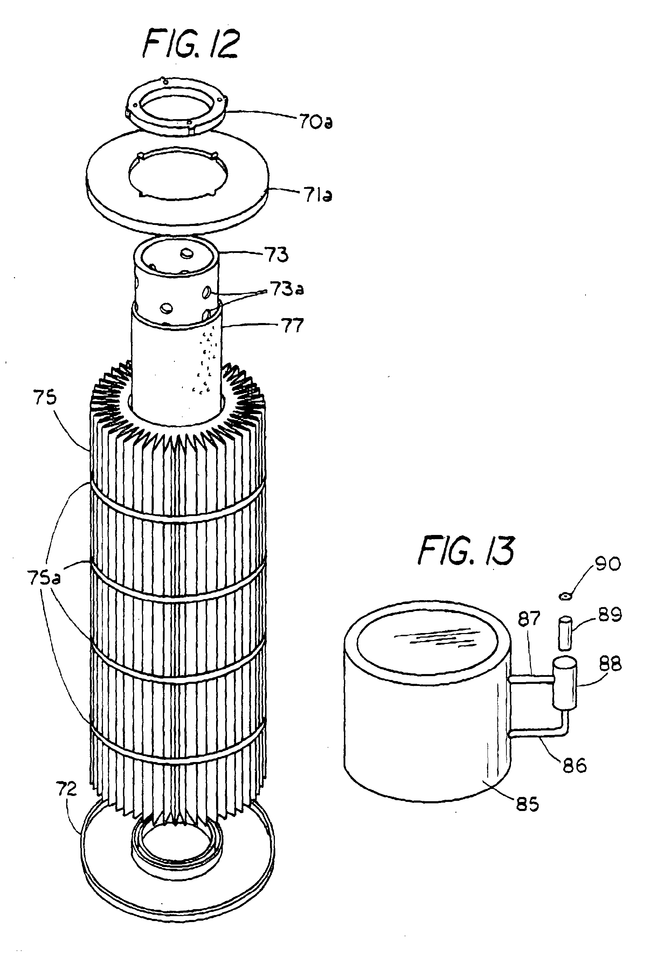

Figure 11 is a perspective view of a porous filter sleeve 80 that has been formed from a single piece of flexible material with the material containing a sonic weld 81 that holds the material in an annular shape. The single piece of material can form an external sleeve for dispersibly carrying the bacteria killing material. That is, the sleeve 80 includes a porous material that lets debris and water through with a bacteria killing material dispersible secured thereto. The bacteria killing material is controllable releasable as water flows through the filter sleeve. In operation filter sleeve 80 can be placed on the outside of a filter cartridge to provide the bacteria killing materials to water flowing through the filter cartridge. By placing the proper size sleeve on the cartridge a user can on an after market basis match the life of the filter medium as a screeener of waste particles to the amount of bacteria killing material necessary to kill bacteria during the useful life of the filter so that the filter can simultaneously release screen waster particles and kill bacteria to provide a dual water filter apparatus.

Figure 12 is a pictorial exploded view of filter cartridge 70 showing the filter core tube 73 with openings 73 therein for flow of water therethrough. Positioned next to core tube 73 is annular sleeve 77 that carries a bacteria killing material dispersed therein that becomes an integral part of the filter. That is annular sleeve 77 sits between core tube 73 and annular filter medium 75. A set of bands 75a are located in a spaced condition around the periphery of filter medium 75 to maintain the integrity of the filter medium.

Figure 13 is a partial schematic view of a system for water purification wherein debris and bacteria are simultaneously removed by a replaceable cartridge. The water purification system includes a container 85 for holding water to be purified. An outlet 86 direct water to filter housing 88 wherein a cartridge filter 89 having a filter medium with a bacteria killing material secured thereto is located. A cap 90 is placed onto top of container 88 to hold filter cartridge 89 therein. The water circulates back into container 85 through conduit 87. Thus it can be envisioned that the system is suitable for water purification of swimming pools, hot tubs or spas which need to maintain the water free of debris as well as free of harmful bacteria.

While the ion yielding material is shown mechanical secured to the filter medium though an adhesive it is envisioned that in certain types of filters the ion yielding materials could be integrally formed into a portion of a filter medium or a water cartridge housing such as an end cap or the filter core. Thus it is envisioned that the bacteria killing material which is yieldable in the presence of water can be carried either within a porous structure of the housing or a porous structure of the filter medium or dispersibly secured to the filter medium so that the bacteria killing material can be released as water contacts the housing.

Thus in one embodiment of the invention the invention comprises a water filter structure that minimizes obstruction to normal flow through the filter housing. The housing including at least a portion therein containing a water treatment composition that yields a water treatment composition material in the presence of water. A filter medium secured to the cartridge has a network of openings sufficiently large to allowing water to flow therethrough but sufficiently small to prevent waste particles from flowing therethrough so that when water flows through the housing the water treatment composition performs an action to the water while the filter medium screens out waste particles from the water. Examples of water treatment compositions that perform an action include algaecides, bactericide, clarifiers. pH adjusters (for example, limestone) and foam suppressants.

While numerous materials are capable of killing water borne bacteria, not all materials are capable of killing bacteria while remaining non-toxic to humans. In addition, the bacteria killing materials need to be maintained at acceptable levels for an extended period of time in order to provide safe water. It is known that metal ions such as zinc ions, copper ions. silver ions, and tin ions are suitable for killing bacteria. However, the use of metal ions requires a delivery mechanism that can both yield the metal ions and maintain the metal ion aqueous concentration within acceptable levels. In the present invention a metal ion yielding material is meant to be understood as one or more compounds that, in the presence of water, yields the metal ions from the compound(s). In the preferred embodiment the metal ion yielding material comprises compounds selected from the group consisting of zinc sulfate, zinc carbonate, zinc chloride, copper chloride, copper carbonate, copper sulfate, silver chloride, stannous chloride and stannic chloride. Each of the above compounds is capable of yielding metal ions. For example zinc carbonate, zinc chloride and zinc sulfate are all capable of yielding zinc ions when placed in water. Similarly, copper chloride, copper carbonate, and copper sulfate all yield copper ions when placed in water. Silver chloride yields silver ions when placed in water and stannous chloride and stannic chloride yield tin ions. Unfortunately, if the metal ion yielding materials are placed directly in water, the concentrations of the metal ions rapidly increase to reach unacceptable levels. For example, if excessive copper ions are present in the water, the copper ions begin to plate out on any fixtures in the pool, thus coating the pool fixtures with an unwanted and unsightly coating of copper. In addition, the surge of metal ions into the water causes a rapid decrease in the ability to provide long term bacteria control. In still other cases metal ion concentrations can rise to levels that could be considered toxic. The present invention provides a water treatment composition wherein the metal ion yielding materials are retained in a condition to controllably release metal ions within acceptable ranges for water treatment. In order to maintain the metal ion yielding materials in a condition to controllably release metal ions into the water, a triple acting adhesive is used. By triple acting adhesive, it is meant that the adhesive can secures itself to dissimilar materials which may be in either solid or particle form. For example, the adhesive should be able to secure itself to a structure and simultaneously secure itself to the metal ion yielding material to hold the metal ion yielding material in position. In addition, the triple acting adhesive needs to maintain its stability over a wide range of water temperatures. The adhesive also needs to limit the amount of metal ions that can be released into the water.

In the preferred embodiment it has been found that four individual triple acting adhesives permit securing itself to the metal ion yielding material and to a separate structure while further maintaining a controlled release of metal ions. The suitable triple acting adhesives are polyurethane, epoxy resin, polyvinyl alcohol, and polyvinyl acetate. A triple acting adhesive selected from the group consisting of polyurethane, epoxy resin, polyvinyl alcohol and polyvinyl acetate provides the controlled release of metal ions from the metal ion yielding materials selected from the group consisting of zinc sulfate, zinc carbonate. zinc chloride, copper chloride, copper carbonate, copper sulfate, silver chloride, stannous chloride and stannic chloride. The preferred triple acting adhesive is polyvinyl acetate. Polyvinyl acetate, which is a non-toxic adhesive, has been found to secure the metal ion yielding material to a structure or to a mineral which is placed in the water and at the same time provides a controlled release of the metal ions. While the mechanism of the controlled release of the metal ions is not fully understood the use of a water insoluble adhesive to secure the ion yielding material to the structure results in a water treatment composition that, when placed in water, maintains the aqueous metal ion concentration at a suitable level for prolonged bacteria killing. Polyvinyl acetate has been found particularly suitable since it is nonsoluble in water and maintains its integrity over a range of water temperatures. For example, a pool may have water at temperatures as low as 70° F and a hot tub may have water at temperatures as high as 104° F. Polyvinyl acetate is particularly suited for such applications since it has been found that the integrity of polyvinyl acetate is maintained over a wide range of temperatures, while at the same time polyvinyl acetate permits a controlled release of metal ions into the water.

While polyvinyl acetate is the preferred triple acting adhesive. other triple acting adhesives for securing the metal ion yielding material, such as polyurethane, epoxy resin, and polyvinyl acetate, also provide a stable yield of metal ions over an extended range of water temperatures.

With the present invention the metal ion yielding material can be secured to an inactive structure or to an active structure that is placed directly in the water supply. For example. the metal ion yielding material can be affixed to an active stricture such as a water filter or to reactive materials that are used to maintain the proper pH of the water supply. A group of suitable materials for maintaining the pH of the water and for supporting the metal ion yielding materials are magnesium carbonate, magnesium silicate, calcium silicate, calcium oxide, silicon dioxide, and calcium carbonate (limestone) or mixtures thereof. Thus, an active structure selected from the group consisting of magnesium carbonate, magnesium silicate, calcium silicate, calcium oxide, silicon dioxide and calcium carbonate or mixtures thereof, provide an active structure that can support the metal ion yielding material thereon.

The following example illustrates how the metal ion yielding material of silver chloride coating was affixed to an active structure of limestone by use of polyvinyl acetate.

### Example 1

A batch of water treatment composition was prepared using 20 pounds of limestone particles as a structure for carrying the water treatment material and using a spray coating method wherein the triple acting adhesive polyvinyl acetate was mixed with the water treatment material before application to the structure. In order to obtain silver chloride a mixture of 200 grams of silver nitrate was mixed with 74 grams of sodium chloride in a mixture of 403 grams of water and 681 grams of latex polyvinyl acetate. The mixture containing the silver chloride was sprayed on the limestone which was tumbled in a container for ten minutes to distribute the adhesive and the silver chloride over the limestone. The coated limestone was allowed to dry until it was non-tacky to the touch.

The water treatment composition was placed in a test body of water and the total silver ion concentration was measured and ranged from 30 to 40 parts per billion with the silver ion concentration being maintained at less than 100 parts per billion.

A test was conducted to measure the dissolution rate of silver from the silver chloride coated minerals produce in example 1. The test unit included a four liter glass reservoir, a peristaltic pump and a 6" by 1.5" cartridge containing the minerals made in accordance with the method described in example 1. The cartridge containing the minerals was placed in the outlet stream of a reservoir with the outlet of the cartridge returning the water to the top of the reservoir. Four liters of city tap water at 75° F was added to the reservoir and pumped through the system at a flow rate of 20 milliliters per minute. Water samples were taken from the bottom of the reservoir at the outlet stream of the reservoir at time intervals of 0. 1, 4, 8, 24, 72 and 120 hours. The water samples were analyzed by graphite furnace atomic absorption spectroscopy for determination of the amount of silver present in the form of colloidal silver and silver ions. The results are as follows:

| Time (hours) | Silver (ppb) |
|---|---|
| 0 | 1.0 |
| 1 | 4.9 |
| 4 | 18 |
| 8 | 26 |
| 24 | 39 |
| 72 | 39 |
| 120 | 43 |

### Example 2

A batch of water purification composition was made in accordance with Example 1 except an equal amount of polyurethane was used as the binder instead of polyvinyl acetate. The test to determine the amount of silver present was repeated. The results are as follows:

| Time (hours) | Silver (ppb) |
|---|---|
| 0 | 1.0 |
| 1 | 1.0 |
| 4 | 23 |
| 8 | 26 |
| 24 | 33 |
| 72 | 37 |
| 120 | 33 |

In both examples the measured concentration of silver (including colloidal silver and silver ions) was sufficient to kill bacteria yet not sufficiently high so as to introduce problems because of the presence of high levels of metal ions. When the metal ion yielding material yields silver ions, it is desirable to maintain the silver concentration between 10 and 100 ppb (parts per billion). As can be seen from example 1 and 2, within a matter of 4 hours the concentration of silver in the reservoir was within the acceptable range. If the metal ion yielding material yields zinc or tin ions, the acceptable aqueous concentration for metal ions generally range from 100 to 2000 parts per billion (ppb). If the metal ion yielding material yields copper ions. the acceptable copper ion concentration in the water ranges from 800 to 1000 parts per billion (ppb)

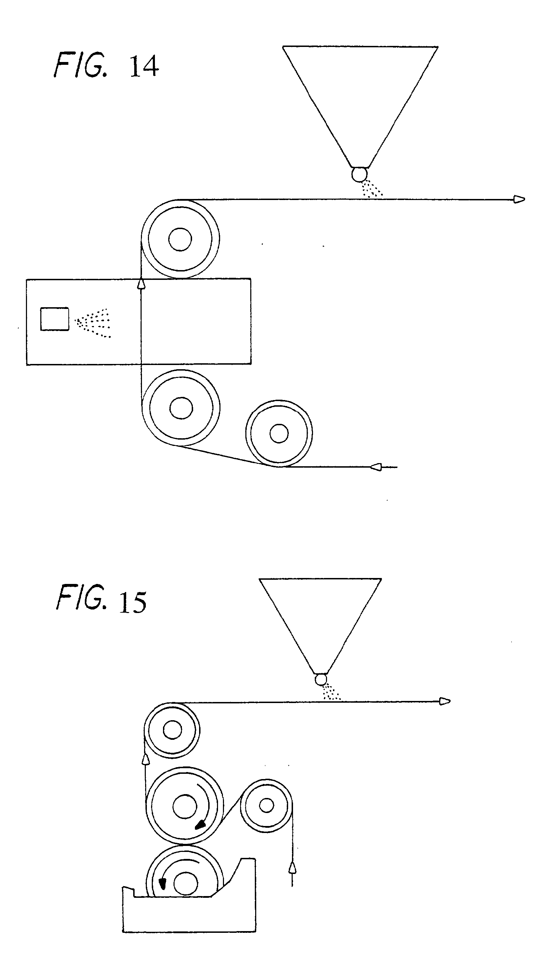

Figure 14 shows a method of applying water purification materials to a web using a spray coating method. In the spray coating method multiple spray heads can be used to apply the adhesive onto a web moving through a chamber. The purpose of the chamber is to prevent contamination of the work area due to over spraying. After the adhesive is applied to the web, a hopper drops particles of the metal ion yielding material onto the adhesive. The coated web is then allowed to dry and rewound for use in manufacture of an article for placing in a water system for the purposes of purifying the water therein.

Figure 15 shows a method of applying water purification materials to a web using a calendar roll coating method. In the method using a calendar roll coat two roll coaters are used to roll an adhesive onto a moving web. The rolls are driven and maintained in a squeezing condition on the web in order to control the thickness of the adhesive applied to the web.
The lower roller is partially submerged in a trough that contains a liquid adhesive. As the lower roller rotates it transfers the adhesive onto the moving web. The metal ion yielding particles are applied to the moving web from a hopper. The entire web can be coated with the adhesive, or separate bands can be coated with the metal ion yielding material.

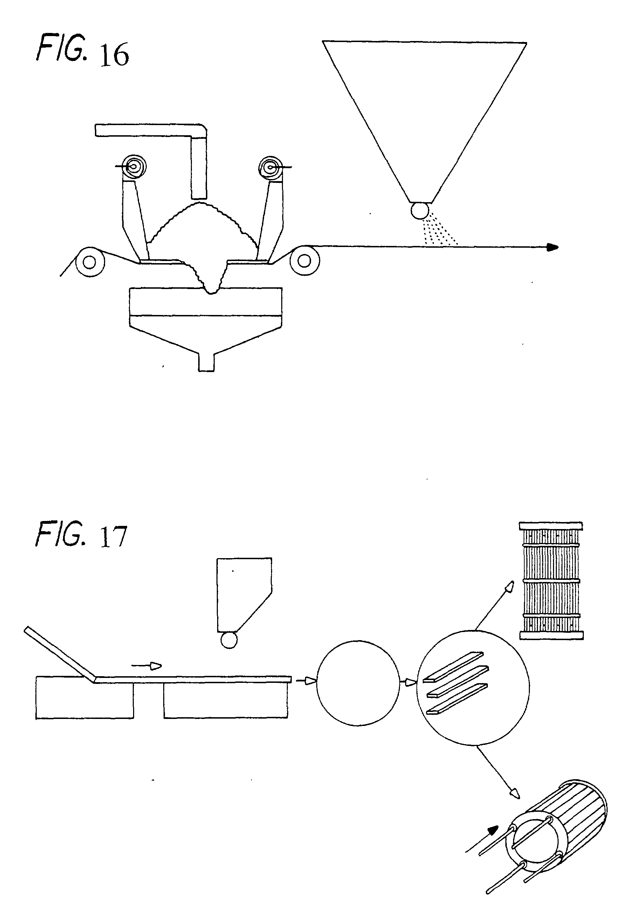

Figure 16 shows a method of applying water purification materials to a web using a knife-over-web method. In this knife-over-web method two steel knives and an adhesive feed assembly are utilized to apply adhesive onto a moving web. Excessive adhesive flows over the web edges and is recirculated. The web covered with adhesive flows under the knife to limit the thickness of the adhesive coating on the web. The metal ion yielding particles are applied to the moving web from a hopper.

Figure 17 shows a method of applying water purification materials to strips of material using an immersion coating method. In the immersion coating method the adhesive is applied to the strips and the metal ion yielding particles are drop coated to the moving article from a hopper. The strips are then adhered to the outside of another structure such as a filter cartridge.

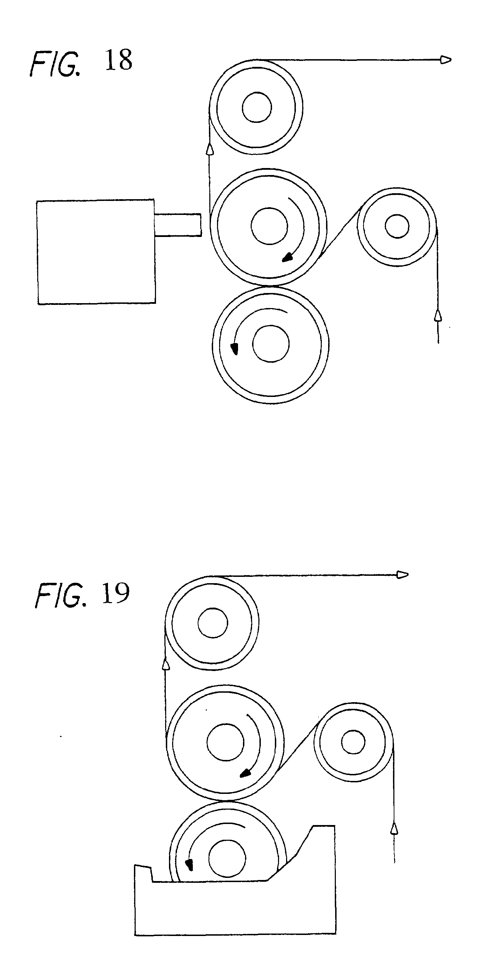

Figure 18 shows a slurry coating method of applying water purification materials to a web using a die coater. In the slurry coating method a pressurized chamber or die is utilized to apply a mixture of adhesive and metal ion yielding metal onto a moving web. In this method the adhesive and metal ion yielding materials are simultaneously applied to the moving web.

Figure 19 shows another slurry coating method of applying water purification materials to a web using a calendar roll coater. In this slurry coating method the adhesive and the metal ion yielding material are placed in a trough and a roller extends partially into the trough to roll the mixture directly onto a moving web.

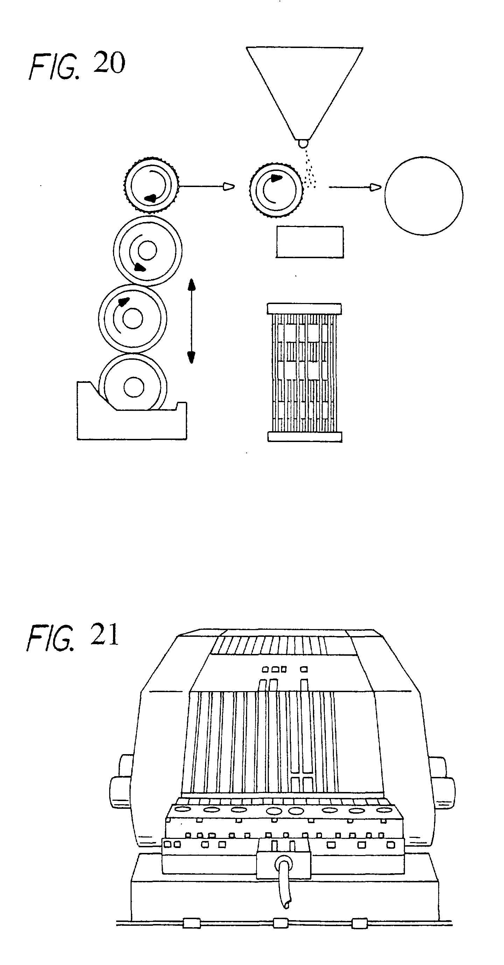

Figure 20 shows a transfer coating method of applying water purification materials to a semi-finished product. In this transfer coating method a preassembled article such as filter contains a transfer roll to transfer a layer of adhesive onto the article. A plurality of transfer rollers can be used to limit the amount of adhesive applied to the article. The metal ion yielding material is then dropped onto the adhesive. In the method shown one can apply multiple metal ion yielding materials to the article. That is, one strip could contain a first metal ion yielding material and the other could contain a different metal in yielding material.

Figure 21 shows a die coating method of applying water purification materials to a web. In this die coating method the die coating is applied to a continuous web, and the metal ion yielding material is drop coated on the web.

In the methods of the present invention the water treatment material is applied to the structure by either applying the adhesive to the structure and then applying the metal ion yielding material to the structure or mixing the adhesive with the metal ion yielding material and then simultaneously applying the mixture of adhesive and metal ion yielding material to the structure.

Where technical features mentioned in any claim are followed by reference signs, those reference signs have been included for the sole purpose of increasing the intelligibility of the claims and accordingly, such reference signs do not have any limiting effect on the scope of each element identified by way of example by such reference signs.

## Claims

1. A method of making a dual filter for in situ water purification that minimizes obstruction to normal flow through a filter housing comprising;
forming a filter medium having a network with openings therein for allowing water therethrough but for preventing waste particles from flowing therethrough; and
securing a controllable release bacteria killing material to said filter medium to enable said dual filter medium to simultaneously screen waste particles from a water source and kill bacteria that come into contact with bacteria killing material.

2. The method of claim 1 including the step of forming the filter medium into a filter cartridge.

3. The method of claim 2 including the step of placing the filter cartridge in a water circulation system for a pool, spa or hot tub.

4. The method of claim 1 including the step of securing the bacteria killing material comprises the step of dispersing a metal ion yielding material on an extended area of the filter medium to minimize flow obstruction through the filter.

5. The method of claim 4 wherein the step of securing the bacteria killing material comprises securing silver chloride to the filter medium.

6. The method of claim 5 wherein the step of securing the bacteria killing materials comprises securing a second metal ion yielding material to said filter medium.

7. The method of claim 1 wherein the step of securing the bacteria killing material comprises adhesively and dispersibly securing silver chloride to an extended portion of said filter medium to thereby minimize obstruction to normal flow through said filter.

8. The method of claim 1 including the step of forming a further bacteria killing material to the filter medium so that the water carried bacteria can come into contact with both the bacterial killing material and the further bacteria killing material to enable both the bacteria killing material and the further bacteria killing material to kill bacteria therein while the filter medium entraps debris thereon.

9. The method of claim 1 wherein the step of securing includes using an adhesive to forms surface attachment to the bacteria killing material and the filter medium to hold the bacterial killing material in a condition for releasing bacteria killing materials therefrom.

10. The method of claim 1 including the step of forming a plurality of fibers having a bacteria killing material thereon and then forming the plurality of fibers into the filter medium.

11. An in situ dual filter apparatus for placement into an existing filter housing of a swimming pool, hot tub or spa that minimizes obstruction to normal flow through the filter housing comprising:
a housing;
a filter medium carried by said housing, said filter medium comprising a network having a plurality of openings therein to enable water to flow therethrough, said filter medium retaining waste particles while allowing water to flow therethrough: and
a bacteria killing material;
an adhesive, said adhesive dispersibly securing and carrying said bacteria killing material on said filter medium to enable, said bacteria killing material controllable releasable over an extended period of time so that a flow of water through said filter medium provides for continuous killing bacteria therein while the filter medium provides for continuos removable of waste particles over the extended period of time to thereby enable the dual filter apparatus to simultaneously and in situ remove waste particles and kill bacteria therein.

12. The dual filter apparatus of claim 11 wherein the bacteria killing material is a silver ion yielding material and the filter medium and the bacteria killing material can be replaced as a unit when the filter medium reaches a condition for replacement.

13. The dual filter apparatus of claim 11 wherein the bacteria killing material is adhesively secured to a portion of said filter medium.

14. The dual filter apparatus of claim 11 including a container for holding water to be purified and a first conduit for directing water to be purified into said dual filter apparatus and a second conduit for directing water that is purified back into the container after the water has been purified.

15. The dual filter apparatus of claim 11 wherein the amount of controllable releasable bacteria killing material is sufficient to controllable release bacteria killing material for as at least a length of period of time as the filter medium can effectively remove waste particles from the system to thereby allow simultaneous replacement of both the filter medium and the bacteria killing material as a unit.

16. The dual filter apparatus of claim 11 wherein the controllable releasable bacteria killing material is located in a film on said filter medium.

17. A water treatment composition for maintaining a metal ion aqueous concentration at a bacteria controlling level comprising:
a metal ion yielding material selected from the group consisting of zinc sulfate, zinc carbonate, zinc chloride, copper chloride, copper carbonate, copper sulfate, silver chloride, stannous chloride and stannic chloride;
a structure; and
a triple acting adhesive, said triple acting adhesive secured to at least one of said metal ion yielding materials, said triple acting adhesive further secured to said structure so that when said structure is placed in a body of water the adhesive supports said metal ion yielding material in a condition whereby the adhesive remains secured to the structure and to the metal ion yielding material, with metal ions maintained in water at a concentration sufficient to kill bacteria therein.

18. The water treatment composition of claim 17 wherein the structure is active and comprises particles of material.

19. The water treatment composition of claim 17 wherein the structure is an active structure selected from the group consisting of magnesium carbonate, magnesium silicate, calcium silicate, calcium oxide, silicon dioxide and calcium carbonate (limestone) or mixtures thereof.

20. The water treatment composition of claim 17 wherein the structure is a Strip of material with said strip of material secured to a filter cartridge.

21. The water treatment composition of claim 17 wherein the triple acting adhesive is selected from the group consisting of polyurethane, epoxy resin, polyvinyl alcohol, and polyvinyl acetate.

22. The water treatment composition of claim 17 wherein the triple acting adhesive is polyvinyl alcohol.

23. The water treatment composition of claim 17 wherein the metal ion yielding material is silver chloride and the triple acting adhesive is polyvinyl acetate with an aqueous silver ion concentration maintained between 10 and 100 parts per billion (ppb).

24. A method of making an article for insitu water treatment comprising the steps of:
selecting a water treatment material from the group consisting of zine sulfate. zine carbonate, zinc chloride, copper chloride, copper carbonate, copper sulfate, silver chloride, stannous chloride and stannic chloride;
selecting an adhesive from the group consisting of polyurethane, epoxy resin, polyvinyl acetate and polyvinyl alcohol;
selecting a water insoluble solid structure;
applying the adhesive to the water insoluble solid structure to form at least a partial coating thereon;
applying the water treatment material to the adhesive on said solid structure;
allowing the adhesive to set to thereby secure the water treatment material to the solid structure; and
forming the structure into an article for placement into a body of water to thereby enable the structure to adhesively support the water treatment material thereon in a condition that maintains a water concentration of metal ions less than 1000 parts per billion (ppb).

25. The method of claim 24 wherein the selected adhesive and selected water treatment material are combined in a slurry and simultaneously coated onto the structure using a die coater.

26. The method of claim 24 wherein the selected adhesive is sprayed on the solid structure and the selected water treatment material is applied to the adhesive on the structure.

27. The method of claim 24 wherein the selected adhesive is roll coated onto the structure and the selected water treatment material is applied to the roll coated adhesive on the structure.

28. The method of claim 24 wherein the selected adhesive is die coated onto the structure and the selected water treatment material is applied to the die coated adhesive on the structure.

29. The method of claim 24 wherein the solid structure is immersed into the selected adhesive and the selected water treatment material is applied to the adhesive after the structure is removed from the adhesive.

30. The method of claim 24 wherein the selected adhesive applied to the solid structure is limited by a knife and the selected water treatment material is applied to the adhesive on the structure.

31. The method of claim 24 wherein the selected adhesive is roll coated onto the structure and the selected water treatment material is roll coated on the adhesive on the structure.

32. A process of making a water treatment composition including the steps of:
a) mixing a first amount of silver nitrate into a first batch of water to form a silver nitrate mixture;
b) mixing a first amount of sodium chloride into the silver nitrate mixture to form a silver chloride mixture;
c) mixing an adhesive securable to both silver chloride and to support particles into a second batch of water to form an adhesive mixture;
d) combing the silver chloride mixture and the adhesive mixture to form an adhesive silver chloride mixture;
e) applying the adhesive silver chloride mixture to support particles; and
f) curing the adhesive silver chloride mixture insitu on the support particles to form support particles having a coating containing silver chloride.

33. The process of making a water treatment composition according to claim 18 wherein mixing an adhesive into a second batch of water includes mixing polyvinyl acetate adhesive into a second batch of water.

34. The process of making a water treatment composition according to claim 18 wherein mixing an adhesive into a second batch of water includes mixing polyurethane adhesive into a second batch of water.
nor
